(19) Europäisches Patentamt
European Patent Office
Office européen des brevets

(11) Numéro de publication : **0 392 896 B1**

(12) # FASCICULE DE BREVET EUROPEEN

(45) Date de publication du fascicule du brevet : **23.02.94 Bulletin 94/08**

(51) Int. Cl.$^5$ : **C23F 11/08,** C02F 1/20

(21) Numéro de dépôt : **90400890.1**

(22) Date de dépôt : **02.04.90**

(54) **Compositions et procédé pour réduire la corrosivité des solutions salines oxygénées par balayage avec des gaz acides.**

(30) Priorité : **10.04.89 FR 8904686**

(43) Date de publication de la demande : **17.10.90 Bulletin 90/42**

(45) Mention de la délivrance du brevet : **23.02.94 Bulletin 94/08**

(84) Etats contractants désignés : **AT BE CH DE DK ES FR GB GR IT LI LU NL SE**

(56) Documents cités :
**GB-A- 2 202 167**
**US-A- 3 094 490**
**US-A- 3 618 667**

(56) Documents cités :
**PETROLEUM ENGINEER INTERNATIONAL, vol. 52, no. 6, mai 1980, pp. 114-120, Dallas, TX, US; N. ADAMS et al.: "H2S detection and protection"**

(73) Titulaire : **CECA S.A.**
**4 - 8, Cours Michelet La Défense 10**
**F-92800 Puteaux (FR)**

(72) Inventeur : **Pou, Tong Eak**
**145, Boulevard Serrurier**
**F-75019 Paris (FR)**

(74) Mandataire : **Haicour, Philippe**
**ELF ATOCHEM S.A., D.P.I. 4-8, Cours Michelet**
**La Défense 10 - Cédex 42**
**F-92091 Paris La Défense (FR)**

**EP 0 392 896 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a trait à un procédé pour réduire la corrosivité vis-à-vis du fer des solutions salines oxygénées, par balayage avec des gaz naturels contenant de l'acide sulfhydrique en présence d'un catalyseur de désoxygénation. Elle vise également la composition utilisée comme catalyseur de désoxygénation.

On réinjecte de l'eau dans les gisements d'hydrocarbures pour maintenir le gisement sous une pression suffisante à son exploitation et à sa conservation. Les eaux d'injection sont généralement salines. Elles le sont de toute évidence lorsqu'il s'agit d'eau de mer utilisée pour regonfler les gisements au large (off shore). En terre ferme, les eaux douces étant précieuses pour d'autres usages, on utilise des eaux de forage ou des eaux de récupération qui sont chargées de sels minéraux. Ces eaux se trouvent également chargées en oxygène dissous, soit par leur contact naturel avec l'atmosphère, soit du fait de leurs manipulations qui ne sont jamais faites en atmosphère inerte. On sait que de les eaux salines oxygénées sont très corrosives vis-à-vis du fer et de l'acier. Aussi utilise-t-on la technique du balayage (strippage) pour les purger de leur oxygène dissous. On utilise pour cela des gaz désaérés. Sur les champs d'hydrocarbures, on dispose en abondance de gaz essentiellement constitués d'hydrocarbures légers, mais qui contiennent des proportions notables de gaz sulfhydrique. La désoxygénation par balayage n'étant pas totale, il en résulte que les eaux que l'on voudrait traiter avec de tels gaz et qui contiendront encore un peu d'oxygène, seront chargées en acide sulfhydrique. Or, si l'on considère que les corrosivité d'eaux. salines, respectivement exempte d'oxygène et d'acide sulfhydrique, simplement oxygénée, uniquement chargée d'acide sulfhydrique, ou chargée à la fois en oxygène et en acide sulfhydrique sont représentées par $V_1$, $V_2$, $V_3$, et $V_4$, on a un le classement en corrosivité suivant: $V_4 2 \tilde{} V_3 1$, et qu'ainsi le balayage de l'oxygène par les gaz pétroliers est pour le moins très insatisfaisant quant à la préservation des installations métalliques.

Les opérations de désulfuration préalable des gaz de balayage d'une part, et la désoxygénation totale des eaux par balayage d'autre part, sont toutes deux des opérations longues et coûteuses, qui de plus exigent des matériels encombrants que l'on ne peut pas embarquer sur les plates-formes off shore. Le problème que s'est posé par la demanderesse, et qu'elle a résolu avec la présente invention, est la mise au point d'un additif apte à limiter la corrosion des installations par les eaux salines retenant de l'oxygène en solution en présence de quantité notables d'acide sulfhydrique.

Le problème s'est déjà posé de l'agressivité des saumures sulfhydriques dont la corrosivité est considérablement augmentée lorsqu'elle se chargent en oxygène par simple contact avec l'atmosphère. Une solution à ce problème à été divulguée par le brevet US 3 618 667 de E. Snavely (Mobil Oil Corporation), selon lequel on se débarrasse de l'oxygène parasite en catalysant sa réduction par le gaz sulfhydrique présent par addition de sels de métaux de transition. On ramène ainsi le niveau de corrosion à celui qui caractérise la solution sulfhydrique non oxygénée. Depuis, les mécanismes de la réaction catalysée de l'oxygène sur l'acide sulfhydrique dissous ont été scientifiquement analysés par O. Weres, L. Tsao et R.M. Chhatre dans Corrosion, vol 41, N° 6, 1985.

On a trouvé que l'on pouvait utiliser ce mécanisme de réduction catalytique pour obtenir la réduction de la corrosivité des eaux salines oxygénées, en les balayant par un courant de gaz ne contenant pas d'oxygène, mais en revanche chargés d'acide sulfhydrique. Pour qu'une telle opération procure un résultat industriel valable, il faut que ce balayage n'installe pas une situation de synergie de corrosivité en chargeant d'acide sulfhydrique le fluide aqueux salin imparfaitement débarrassé de son oxygène dissous. La catalyse par les sels de métaux de transition selon Snavely permet, certes, d'éviter une telle situation. Mais on a maintenant chargé la solution saline en acide sulfhydrique, et donc remplacé la corrosion par l'oxygène par une corrosion sulfhydrique, laquelle, si elle se présente sous un aspect moins dramatique, reste néanmoins d'un niveau inacceptable. L'association des sels de métaux de transition avec des inhibiteurs de corrosion sulfhydrique classiques (dérivés cationiques à chaîne grasse, notamment les sels d'amines grasses, sels d'ammonium quaternaire à chaîne grasse), n'apporte pas la solution désirée, car ces composés ont la fâcheuse propriété, en la circonstance, de bloquer la catalyse de décomposition de $H_2S$ par l'oxygène.

La demanderesse a trouvé que de façon surprenante il était possible de réduire efficacement la corrosivité des solution salines aérées vis-à-vis des métaux ferreux par un balayage desdites eaux aérées avec des gaz contenant de l'acide sulfhydrique si on les additionne d'une composition associant des sels de métaux des colonnes VIII et Ib, ligne 4 de la classification périodique des éléments, et certaines alkylamines oxyalkylées à chaîne grasse.

La composition selon l'invention est constituée par une solution hydro-alcoolique d'un sel métallique pris dans le groupe comprenant le nickel, le cobalt, le cuivre et le fer, et d'une amine grasse oxyalkylée. Le sel métallique est un sel hydrosoluble, généralement le sulfate ou le chlorure. L'amine grasse oxyalkylée est généralement le produit résultant de l'oxyalkylation d'une monoamine ou d'une polyamino (éthyl ou propyl) amine munies d'une chaîne aliphatique à 10-22 atomes de carbone; on préfère très généralement l'oxyalkylation avec

de l'oxyde d'éthylène qui conduit à des dérivés bien solubles dans l'eau et les solutions salines. Un composé préféré de l'invention est le produit de condensation des amines dont la chaîne alkyle comprend environ 12 atomes de carbones, avec de 7 à 15 molécules d'oxyde d'éthylène. Le solvant est un mélange homogène hydro-alcoolique, choisi pour dissoudre à la fois le sel métallique et l'amine oxyalkylée. De préférence, on utilise des mélanges eau-éthanol, ou mieux eau-éthylène glycol, dont le point d'inflammabilité très élevé et le point de congélation très bas sont appréciés pour formuler des produits exposés sur chantier à toutes sortes de conditions météorologiques.

Dans la composition selon l'invention le rapport pondéral entre le métal de transition et l'amine grasse oxyalkylée est compris entre 5:30 et 25:30, la teneur en matières actives, celles-ci étant comprises comme la somme du métal de transition et de l'amine grasse oxyalkylée étant comprise entre 15 et 55% , et le solvant alcoolique figurant pour une proportion pondérale comprise approximativement entre 5 et 20% .

On utilise ces compositions en les dissolvant dans des milieux aqueux dont la teneur en $H_2S$ est comprise entre environ 10 ppm et la limite de saturation, soit environ 1500 ppm, à raison d'environ 20 ppm de ces compositions par ppm d'oxygène dissous restant présent après strippage. Les techniciens apprécieront la très grande tolérance de ce dosage en composition selon l'invention.

L'utilisation des compositions selon l'invention est particulièrement avantageuse pour la réinjection des puits de pétrole ou de gaz off shore, où l'on dispose en abondance comme fluide de réinjection d'eau de mer saturée en oxygène et de gaz d'hydrocarbures acides pour son strippage. Le procédé selon l'invention n'est évidemment pas limité aux installations off-shore. Il peut être appliqué tout aussi avantageusement pour la réinjection des formations d'hydrocarbures en terre ferme à l'aide d'eaux de gisement salines que leur processus d'extraction même aura mis en contact et réoxygéné.

EXEMPLES

Dans les exemples suivants qui illustrent l'invention:

- on a soumis à la corrosion des échantillons de métal ferreux constitués d'acier type N80;
- on a utilisé de l'eau de mer synthétique selon la norme ASTM D 1141;
- on a contrôlé
  - les teneurs en acide sulfhydrique par dosage iodométrique;
  - les teneurs en oxygène dissous par sonde à oxygène;
- on a mesuré les vitesses de corrosion instantanée par méthode potentiodynamique classique (méthode des droites de Tafel).

Exemple 1

L'additif selon l'invention a ici la composition pondérale A1 suivante:

| | |
|---|---|
| Sulfate de nickel | 5 |
| Noramox* CD11 | 30 |
| Acide sulfurique à 96% | 2 |
| Ethylène-glycol | 10 |
| Antimousse | 0,2 |
| Eau | 52,8 |

A de l'eau de mer équilibrée à 7 ppm d'oxygène, et dans laquelle on a introduit des quantités variables d'acide sulfhydrique par barbotage de gaz sulfhydrique, on ajoute 140 ppm de l'additif ci-dessus (20 ppm par ppm de $O_2$), et on suit la variation de la teneur en oxygène dans le temps. On a au préalable vérifié que la présence d'acide sulfhydrique n'entraîne aucune dérive sensible de la réponse de la sonde à oxygène.

Les résultats sont consignés dans le tableau N°1. On voit que dès que la teneur en $H_2S$ atteint 20 ppm, l'additif provoque la disparition quasi totale de l'oxygène dissous en l'espace de quelques minutes.

* Le Noramox CD 11 est une amine oxyéthylénée commercialisée par la Société CECA S.A., et qui est constituée d'une amine grasse primaire à chaîne coprah, oxyéthylée à raison de 11 molécules d'oxyde d'éthylène par molécule d'amine.

**Tableau 1**

**Destruction de l'oxygène dans une eau de mer sulfhydrique en présence de 20 ppm d'additif A1 selon l'exemple 1 par ppm d'oxygène dissous**

| $H_2S$ (ppm) / durée (minutes) | 0 | 1 | 2 | 4 | 6 | 8 | 10 | 12 |
|---|---|---|---|---|---|---|---|---|
| 10 | 7 | 7 | 7 | 6,6 | 6,0 | 5,3 | 4,8 | 4,1 |
| 20 | 7 | 6,8 | 5,9 | 3,3 | 1,7 | 0,6 | 0,07 | 0,04 |
| 50 | 7,1 | 6,8 | 4,8 | 1,6 | 0,055 | 0,04 | | |
| 100 | 7,2 | 6,6 | 4,5 | 1,3 | 0,03 | | | |
| 200 | 6,6 | 4,9 | 2,8 | 0,15 | 0,02 | | | |

Exemple 2 (contre-exemple)

On a réalisé cet essai dans les conditions générales de l'exemple 1, mais on a remplacé l'additif A1 par un additif A2 de composition:

| | |
|---|---|
| Sulfate de nickel | 5 |
| Sel d'ammonium quaternaire* | 30 |
| Acide sulfurique à 96% | 2 |
| Ethylène-glycol | 10 |
| Antimousse | O,2 |
| Eau | 52,8 |

Les résultats qui sont consignés dans le tableau N°2 font apparaître un blocage de la réaction de consommation de l'oxygène par le sel d'ammonium quaternaire, alors que catalysée par l'additif selon l'invention, la réaction a progressé jusqu'à la disparition complète de l'oxygène.

On enregistre le même blocage quand au lieu d'un sel d'alkylammonium quaternaire, on utilise un dérivé amphotère, comme par exemple le coprah-aminopropionate de sodium, ou le chlorure de (carboxyméthyl)coprah-diméthylammonium.

* Dans cette formule, le sel d'ammonium quaternaire utilisé est le Noramium DA 80 de la Société CECA S.A, qui est une solution de chlorure de coprah-diméthyl-benzyl-ammonium.

**Tableau 2**

**Destruction de l'oxygène dans une eau de mer sulfhydrique (100 ppm de $H_2S$) en présence de 20 ppm d'additif A2 par ppm d'oxygène dissous**

| durée (minutes) | 0 | 1 | 2 | 4 | 6 | 8 | 10 | 12 |
|---|---|---|---|---|---|---|---|---|
| Additif A1 | 7,2 | 6,6 | 4,5 | 1,3 | 0,03 | 0 | 0 | 0 |
| Additif A2 | 7,0 | 6,8 | 6,8 | 6,7 | - | 6,6 | - | 6,4 |

Exemple 3

Dans cet exemple, l'additif est celui de l'exemple 1, utilisé à raison de 150 ppm.

On a appliqué divers traitements à une eau de mer initialement proche de la saturation en oxygène (7,5 ppm de $O_2$), et on a mesuré la vitesse de corrosion instantanée de l'acier N 80 plongé dans ce milieu. La mesure est faite environ 10 minutes après traitement de l'eau de mer.

Les résultats sont consignés sur le tableau N°3 qui met en évidence la très sensible réduction de corrosion par application du procédé selon l'invention.

**Tableau 3**

**Corrosivité de solutions salines**

**Additif A1**

| Solution Corrosive | Aérée | Partiellement désaérée par azote | | |
|---|---|---|---|---|
| | | Telle quelle | + 100 ppm $H_2S$ | +100 ppm $H_2S$ + 40 ppm d'additif A1 |
| $O_2$ dissous ppm | ~7,2 | ~2 | 2 | ~0 |
| Vitesse de Corrosion mm/an | 2,15 | 0,6 | 0,9 | 0,15 |

Exemple 4 (contre-exemple)

On compare ici les résultats obtenus avec l'inhibiteur de composition A1 selon l'invention d'une part, et d'autre part avec une formulation A4 selon l'art antérieur:

| | |
|---|---|
| Sulfate de nickel | 5 |
| Acide sulfurique à 96% | 2 |
| Ethylène-glycol | 10 |
| Antimousse | O,2 |
| Eau | 82,8 |

Dans les deux cas, la solution saline constituée par de l'eau de mer ASTM, a été initialement aérée, puis partiellement désaérée par de l'azote, chargée de 100 ppm de $H_2S$. Ces solutions salines contiennent respectivement 40 ppm d'additif A1 selon l'invention et 40 ppm de l'additif A4 selon l'art antérieur. Dans les deux cas,

on a constaté la disparition rapide de l'oxygène, mais le milieu traité avec l'inhibiteur A4 reste corrosif, ainsi qu'en témoignent les résultats consignés sur le tableau N°4.

**Tableau 4**

**Corrosivité de solutions salines**

**Additifs A1 et A4**

| Solution Corrosive | Partiellement désaérée par azote | | | |
|---|---|---|---|---|
| | Telle quelle | +100 ppm $H_2S$ | +100 ppm $H_2S$ + 40 ppm d'additif A1 | 100 ppm $H_2S$ +40 ppm d'additif A4 |
| $O_2$ dissous ppm | ~ 2 | 2 | ~ 0 | ~ 0 |
| Vitesse de corrosion mm/an | 0,5 | 0,9 | 0,15 | 1,0 |

## Revendications

1. Composition destinée à réduire la corrosivité de solutions salines partiellement désaérées par balayage à l'aide de gaz acides, comprenant:
   - de 5 à 25% en poids d'un sel hydrosoluble d'un métal pris dans le groupe constitué par le fer, le nickel, le cobalt et le cuivre;
   - de 10 à 30% d'une amine grasse oxyalkylée de formule générale

```
          (R'-O)n-H
         /
  R - N
         \
          (R'-O)m-H
```

où R est une chaîne alkyle saturée ou insaturée dont le nombre de carbones est compris entre 10 et 16,
où R' est un reste alkyle comprenant de 2 à 4 carbones,
où n et m sont des entiers non nuls tels que n+m sont compris entre 7 et 15.

2. Composition selon la revendication 1 caractérisée en ce que le sel hydrosoluble de métal est un sel de nickel.

3. Composition selon la revendication 2 caractérisée en ce que amine grasse oxyalkylée de formule générale

```
          (R'-O)n-H
         /
  R - N
         \
          (R'-O)m-H
```

est une amine à chaîne grasse de coprah oxyalkylée à environ 11 molécules d'oxyde d'éthylène.

4. Composition selon l'une des revendications 1 à 3, caractérisée en ce qu'elle comporte en outre un solvant hydro-alcoolique.

5. Procédé pour réduire la corrosivité d'eaux salines aérées vis-à-vis des métaux ferreux, caractérisé en ce qu'il comporte un balayage desdites eaux salines aérées avec des gaz contenant de l'acide sulfhydrique, et l'addition d'une composition catalytique de la réduction de l'oxygène et inhibitrice de corrosion sulfhydrique contenant de 5 à 25% d'un sel hydrosoluble d'un métal pris dans le groupe constitué par le fer, le nickel, le cobalt et le cuivre, et de 10 à 30% d'une amine grasse oxyalkylée de formule générale

```
          (R'-O)n-H
         /
  R - N
         \
          (R'-O)m-H
```

où R est une chaîne alkyle saturée ou insaturée dont le nombre de carbones est compris entre 10 et 16,
où R' est un reste alkyle comprenant de 2 à 4 carbones,
où n et m sont des entiers non nuls tels que n+m sont compris entre 7 et 15.

6. Procédé selon la revendication 5 caractérisé en ce que le sel hydrosoluble de métal contenu dans la composition à la fois catalytique de la réaction de l'oxygène et inhibitrice de la corrosion est un sel de nickel.

7. Procédé selon, la revendication 5 caractérisé en ce que l'amine grasse oxyalkylée de formule générale

```
          (R'-O)n-H
         /
  R - N
         \
          (R'-O)m-H
```

contenue dans la composition à la fois catalytique de la réaction de l'oxygène et inhibitrice de la corrosion est une amine grasse de coprah oxyalkylée à environ 11 molécules d'oxyde d'éthylène.

8. Procédé selon l'une quelconque des revendications 5 à 7, caractérisé en ce la composition catalytique et inhibitrice comporte, outre le sel métallique hydrosoluble et l'amine grasse oxyalkylée, un solvant hydroalcoolique.

## Claims

1. Composition intended to reduce the corrosiveness of saline solutions which have been partially deaerated by stripping with the aid of acid gases, comprising:
   from 5 to 25% by weight of a water-soluble salt of a metal chosen from the group consisting of iron, nickel, cobalt and copper, and
   from 10 to 30% of an oxyalkylated fatty amine of general formula

$$R-N\begin{matrix}/\,(R'-O)_n-H\\ \backslash\,(R'-O)_m-H\end{matrix}$$

   where R is a saturated or unsaturated alkyl chain of which the carbon number is between 10 and 16, R' is an alkyl radical comprising from 2 to 4 carbons and n and m are non-zero integers, such that n+m is between 7 and 15.

2. Composition according to Claim 1, characterized in that the water-soluble metal salt is a nickel salt.

3. Composition according to Claim 2, characterized in that the oxyalkylated fatty amine of general formula

$$R-N\begin{matrix}/\,(R'-O)_n-H\\ \backslash\,(R'-O)_m-H\end{matrix}$$

   is an amine having a fatty copra chain, oxyalkylated with about 11 molecules of ethylene oxide.

4. Composition according to one of Claims 1 to 3, characterized in that it furthermore comprises an aqueous alcoholic solvent.

5. Process for reducing the corrosiveness of aerated saline waters towards ferrous metals, characterized in that it comprises stripping the said aerated saline waters with gases containing hydrogen sulphide and adding a compound which catalyses a reduction of the oxygen and inhibits hydrogen sulphide corrosion, containing from 5 to 25% of a water-soluble salt of a metal chosen from the group consisting of iron, nickel, cobalt and copper, and from 10 to 30% of an oxyalkylated fatty amine of general formula

$$R-N\begin{matrix}/\,(R'-O)_n-H\\ \backslash\,(R'-O)_m-H\end{matrix}$$

   where R is a saturated or unsaturated alkyl chain of which the carbon number is between 10 and 16, R' is an alkyl radical comprising from 2 to 4 carbons and n and m are non-zero integers such that n+m is

between 7 and 15.

6. Process according to Claim 5, characterized in that the water-soluble metal salt contained in the composition which both catalyses the reaction of the oxygen and inhibits the corrosion is a nickel salt.

7. Process according to Claim 5, characterized in that the oxyalkylated fatty amine of general formula

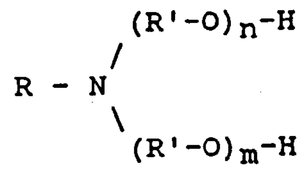

contained in the composition which both catalyses the reaction of the oxygen and inhibits the corrosion is a copra fatty amine oxyalkylated with about 11 molecules of ethylene oxide.

8. Process according to any one of Claims 5 to 7, characterized in that the catalytic and inhibitory composition comprises an aqueous alcoholic solvent in addition to the water-soluble metal salt and the oxyalkylated fatty amine.

**Patentansprüche**

1. Mischung zur Verminderung der korrodierenden Eigenschaft salzhaltiger Lösungen, die durch Spülung mit sauren Gasen teilweise entlüftet wurden, enthaltend:
   - 5 bis 25 Gewichtsprozente eines wasserlöslichen Salzes eines Metalls aus der Gruppe von Eisen, Nickel, Cobalt und Kupfer
   - 10 bis 30 Gewichtsprozente eines oxyalkylierten Fettamins der allgemeinen Formel

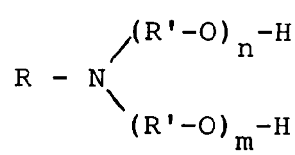

   in der R eine gesättigte oder ungesättigte Alkylkette ist, deren Zahl der Kohlenstoffatome zwischen 10 und 16 liegt,
   R' ein Alkylrest mit 2 bis 4 Kohlenstoffatomen ist und
   n und m von Null verschiedene ganze Zahlen sind, derart daß n+m zwischen 7 und 15 liegt.

2. Mischung nach Anspruch 1, dadurch gekennzeichnet, daß das wasserlösliche Metallsalz ein Nickelsalz ist.

3. Mischung nach Anspruch 2, dadurch gekennzeichnet, daß das oxyalkylierte Fettamin der allgemeinen Formel

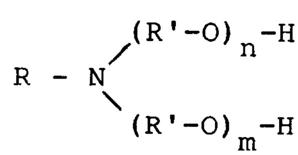

ein mit ungefähr 11 Molekülen Ethylenoxid oxyalkyliertes Kopra-Fettamin ist.

4. Mischung nach einem der Ansprüche 1 bis 3, dadurch gekennzeichnet, daß sie außerdem ein alkoholisches Lösungsmittel enthält.

5. Verfahren zur Verminderung der korrodierenden Eigenschaft von lufthaltigem salzigem Wasser gegenüber Eisenmetallen, gekennzeichnet durch eine Spülung der genannten lufthaltigen salzigen Wässern mit Schwefelwasserstoff enthaltenden Gasen, die Zugabe einer katalytischen Zusammensetzung zur Sauerstoffreduktion und zur Inhibierung von Schwefelwasserstoffkorrosion enthaltend 5 bis 25 % eines wasserlöslichen Salzes eines Metalls aus der Gruppe von Eisen, Nickel, Cobalt und Kupfer und 10 bis 30 % eines oxyalkylierten Fettamins der allgemeinen Formel

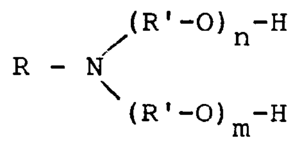

in der R eine gesättigte oder ungesättigte Alkylkette ist, deren Zahl der Kohlenstoffatome zwischen 10 und 16 liegt,
R' ein Alkylrest mit 2 bis 4 Kohlenstoffatomen ist und
n und m von Null verschiedene ganze Zahlen sind, derart daß n+m zwischen 7 und 15 liegt.

**6.** Verfahren nach Anspruch 5, dadurch gekennzeichnet, daß das wasserlösliche Metallsalz in der Zusammensetzung, die gleichzeitig die Reaktion des Sauerstoffes katalysiert und die Korrosion inhibiert, ein Nickelsalz ist.

**7.** Verfahren nach Anspruch 5, dadurch gekennzeichnet, daß das oxyalkylierte Fettamin der allgemeinen Formel

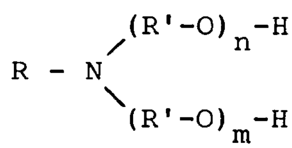

das in der Zusammensetzung enthalten ist, die gleichzeitig die Reaktion des Sauerstoffs katalysiert und die Korrosion inhibiert, ein mit ungefähr 11 Molekülen Ethylenoxid oxyalkyliertes Kopra-Fettamin ist.

**8.** Verfahren nach einem der Ansprüche 5 bis 7, dadurch gekennzeichnet, daß die katalytische und inhibierend wirkende Zusammensetzung neben dem wasserlöslichen Metallsalz und dem oxyalkylierten Fettamin ein alkoholisches Lösungsmittel enthält.